# EUROPEAN PATENT SPECIFICATION

(11) **EP 1 639 921 B1**
(45) Date of publication and mention of the grant of the patent: **24.01.2007**
(21) Application number: 05255987.9
(22) Date of filing: 26.09.2005
(51) Int. Cl.: A47J 27/21

(54) **Electric liquid boiling appliances**
Elektrischer Wasserkocher
Bouilloire électrique

(30) Priority: 28.09.2004 GB 0421524
(43) Date of publication of application: 29.03.2006
(73) Proprietor: STRIX LIMITED, Ronaldsway, Isle of Man IM9 2RG (GB)
(72) Inventor: Garvey, Vincent Joseph, Isle of Man IM1 2BD (GB)
(74) Representative: Samuels, Adrian James

(56) References cited:
- EP-A- 1 462 039
- WO-A-97/04694

## Description

The present invention relates to liquid boiling appliances, in particular water boiling appliances such as kettles and hot water jugs, and having electric heating means provided on the base of the liquid heating chamber of the appliance. The heating means may, for example, comprise a sheathed electric heating element bonded to the underside of the chamber base, for example through a thermal diffusion member, or a thick film element printed onto or attached to the base of the chamber. Such appliances are well known in the art, and are described, for example, in WO 96/18331.

Traditionally water boiling appliances comprise a steam sensitive switch which switches off or reduces the power of the appliance heater when water in the appliance boils. Such controls typically comprise a temperature sensitive actuator, such as a bimetallic actuator, which is suitably arranged in fluid communication with the heating chamber. When water in the chamber boils, the steam generated is brought into contact with the actuator which then operates a control.

More recently, there have been proposals for non-steam sensitive boiling controls. In two such proposals, namely the applicant's WO 97/04694 and WO02/085169, the base of the heating chamber is provided with a relatively small volume sump against the external base of which is located a thermally sensitive actuator. When water in the chamber is heating, the temperature of the water in the sump lags behind the bulk water temperature, but upon boiling the temperature of the water in the sump rises quickly as it is displaced by boiling water. This rise in temperature is sensed by the actuator which operates the control.

There are, however, a number of potential limitations with the arrangements disclosed in the above proposals.

Firstly, due to the proximity of the sump to the heating means of the appliance, the ambient temperature in the region of the sump will be hot, and not facilitate a quick reset time for the actuator after it has operated. This means that it may be difficult to reboil water quickly after the boiling control has operated as the actuator will not have reset.

Secondly, the sumps which have been proposed have taken the form of a cup which is suitably formed in or attached to the chamber base. This imposes certain design and manufacturing constraints on the designer.

Finally the applicant has found when designing and testing water heating appliances, especially with peripheral sump arrangements, and heat bridges between the sump and a thermal sensor; that it is difficult in practice to heat the thermal sensor quickly. For example when heating a minimal water volume (250 cm²) using a high power heater (3000W) the heating is so quick (30-40 seconds) that very little mixing occurs, and, at the point where boiling starts, the heat bridge is still at a temperature close to ambient (25-35°C). On the other hand, if a large volume (1.7L) of water is heated using a low power heater (1200W) the long heat-up time (9 minutes) means that the heat bridge will already be at a high temperature (70-80°C) when boiling starts. In either case, it is desirable for the thermal sensor to reach its threshold temperature (say 90°C for a snap-acting bimetallic actuator) in about 10 to 20 seconds from boil commencement.

The situation is further complicated by the influence of the ambient temperature in the region of the actuator. In the first instance above, the ambient temperature remains virtually unchanged after 30 Sec (25-35°C). It is known to heat a bimetallic actuator by surface contact where the unheated side of the blade is exposed to ambient air. Typically this method is used for protection against damage when an appliance is energised with insufficient water in: where the temperature can continue to rise; and where the actuator will eventually operate, even though the element has heated to much higher temperature (typically a 135°C actuator will operate when the element is at 165°C-185°C). This "error" is of little consequence in such dry switch-on (DSO) application.

It is also known to heat an actuator by convection and latent transfer from steam (steam blade) where the hot gas contacts both surfaces of the blade simultaneously.

The applicant has appreciated that as the actuator approaches its snap temperature, its shape changes slightly (a "creep" movement of about 0.2mm prior to the snap movement of 1.8 to 2.4mm). This means that the actuator will then be separated from the heating surface by a small layer of air. The effect of this it that the further heating of the blade relies on convection rather than conduction. The final actuator temperature will ultimately stabilise at a temperature therefore which is half way between the hot air on one side and the ambient air on the other. As demonstrated above, when heating quickly, this means the actuator may not detect the boil event due to the cooling effect of the ambient air.

The present invention seeks to overcome or ameliorate these problems and provides an electric liquid boiling appliance, said appliance having a liquid heating chamber having a heated base, said base being provided with a sump recess for holding liquid and a thermal sensor mounted in thermal contact with a wall of said recess for determining the presence of boiling liquid in the recess; wherein said thermal sensor is received in a pocket in a heat bridge arrangement which is at least partially enclosed so as to restrict airflow over the sensor.

Thus it will be seen that in accordance with the invention the efficiency of convective heat transfer processes is enhanced by at least partially enclosing the thermal sensor. In this situation, the small pocket of air enclosed may be rapidly heated, so that on both sides the thermal sensor, e.g. a bimetallic actuator, is heated by convection, and is isolated from the influence of the ambient air temperature. This allows for a faster operation when the water in the appliance boils as the temperature rise in the recess will be communicated to the sensor more quickly.

In preferred embodiments the sensor is in direct contact with the heat bridge arrangement on two sides. For example where, as is preferred, the sensor comprises a bimetallic actuator having a cut-out defining a central tongue, the heat bridge may be in contact with the tongue on both sides which would also serve to anchor the actuator. Having direct contact on both sides is beneficial in helping to maximise heat conduction and further to enhance the sensing of boiling.

The sensor could be a physically passive sensor such as a thermistor or thermocouple. Preferably though the thermal sensor is a thermally sensitive actuator operable in the event of liquid in the vessel boiling.

Preferably the actuator is a bimetallic actuator, more preferably a snap-acting actuator of the type disclosed in GB 1,542,252. These are well known in the art and need not be discussed further.

The actuator is preferably part of a thermally sensitive control unit. In one example, this may be a standard steam switch unit such as the Applicant's R48 control unit. In the preferred embodiment, however, the actuator is part of an integrated control and connector system such as one of the Applicant's U18 series of products. The latter and their basic mode of operation are described in WO 95/34187, whose disclosure is hereby incorporated by reference.

In both these controls, the actuator operates to trip a trip lever in the control to open a set of contacts, the effect of which is to switch off or reduce the power to the heated base.

Any sump arrangement could be used such as those disclosed in WO 97/04694 or WO02/085169 for example. Preferably however the sump recess is in the form of a channel, most preferably a channel extending around at least part of the outer periphery of the heated base.

In such an arrangement, the outside wall of the channel may be exposed to an ambient temperature at, or close to, room temperature, and the heat transfer efficiency may be higher as convective air currents can be generated by the outer channel wall, meaning that the water will cool more quickly than in a cup-like sump allowing the sensor to cool more quickly and, where an actuator is provided, to reset.

Further, as the well is formed at the periphery of the base, it can more easily be made with a high surface area, meaning that heat can be collected over a larger area, providing rapid heating of the sensor once turbulent boiling has begun, leading to rapid sensing of boiling and/or operation of the actuator.

Also, the channel may be more easily manufactured than other forms of sump recesses.

Preferably, the channel has a depth to radial width ratio of greater than one. The ideal ratio in a particular application will depend upon the power rating of the heater and the maximum volume of water in the appliance.

Preferably, the channel has a width at its top of less than 10% and most preferably less than 5% of the base diameter. Such a relatively narrow opening can be used to restrict pre-boil mixing of water within the heating chamber.

The channel can be a continuous channel and extend around the entire periphery of the base. It has been found, however, that circumferential flow currents may be set up within the channel, which potentially flushes cooler water from the channel during heating and thus give rise to premature operation of the actuator. To prevent this effect, the channel may be formed so as to extend only partially around the periphery of the base, or may be provided with one or more baffles arranged within the channel to disrupt the formation of these currents.

The channel may be formed in any suitable manner. For example, it may be formed in a one-piece base, e.g. by drawing or pressing. Alternatively, it may be fabricated for example by attaching an outer wall to an L-shaped flange formed in the base of the heating chamber. The outer wall may be of the same or of a different material to the rest of the base. For example the base may be stainless steel, and the outer wall be stainless steel, glass or plastics. Preferably, however, the channel is preformed in the base prior to assembly of the appliance.

For optimum operation of arrangements in accordance with the invention, it is necessary to ensure that the rate of heating energy conducted from the sump recess via the heat bridge must be significantly greater than the heat loss to ambient. This could be achieved by making the link from a thick material. If the cross sectional area is large compared to the length, a high rate of conduction may be achieved. Additionally or alternatively the heat bridge may be made of a high thermal conductivity material such as copper or aluminium and it may be bonded, for example brazed or welded, to the channel wall(s).

Advantageously the heat bridge will be shaped to follow the shape of the actuator on at least one and preferably both sides to further increase conductive heat transfer thereto. In particularly preferred embodiments the thermal bridge comprises two leaves and the thermal sensor is at least partially encapsulated between the leaves.

Where, as is preferred, the sump is in the form a channel, it will be recognised that the radially outer wall of the channel or the bottom of the channel will be cooler than the inner wall, as they are more distant from the heating means. It is therefore advantageous to mount the heat bridge in contact with one or both of these regions, rather than the channel inner wall.

To facilitate cooling of the sump recess and/or thermal sensor after boiling, the channel may be provided with a cooling member attached thereto in the region of the sensor. In one embodiment, the heat bridge is provided with a part which is spaced from a wall of the channel so as to allow heat to dissipate therefrom.

In alternative embodiments a separate cooling member may be provided. This may be advantageous as it means that the heat bridge, for conducting heat to the sensor, and the cooling member may have different thermal capacities. In this way, the heat bridge may be configured to allow heat to be transferred rapidly to the sensor so as to allow swift detection of boiling of water in the appliance while the cooling member can be configured to provide rapid cooling after sensing boiling e.g. by operation of an actuator.

The cooling member and heat bridge may have different surface areas, thicknesses and so on to provide the necessary performance.

When viewed from a further aspect the invention provides an electric water heating appliance, said appliance having a water heating chamber having a heated base, said base being provided with a sump recess for holding water and a thermal sensor mounted in thermal contact with a wall of said recess for determining the presence of boiling water in the recess; wherein said thermally sensitive actuator is received in a pocket in a heat bridge arrangement which is at least partially enclosed so as to restrict airflow over the sensor.

A preferred embodiment of the invention will now be described by way of example only with reference to the accompanying drawings in which:
Figure 1 shows a bottom view of a part of an appliance in accordance with which the invention can be used;
Figure 2 shows a sectional view through Figure 1 along the line II-II;
Figure 3 shows a perspective view of an embodiment of the invention;
Figure 4 shows a further view of the embodiment of Figure 3 with the sump channel removed for clarity; and
Figure 5 shows a sectional view of the heat bridge of the embodiment of Figures 3 and 4.

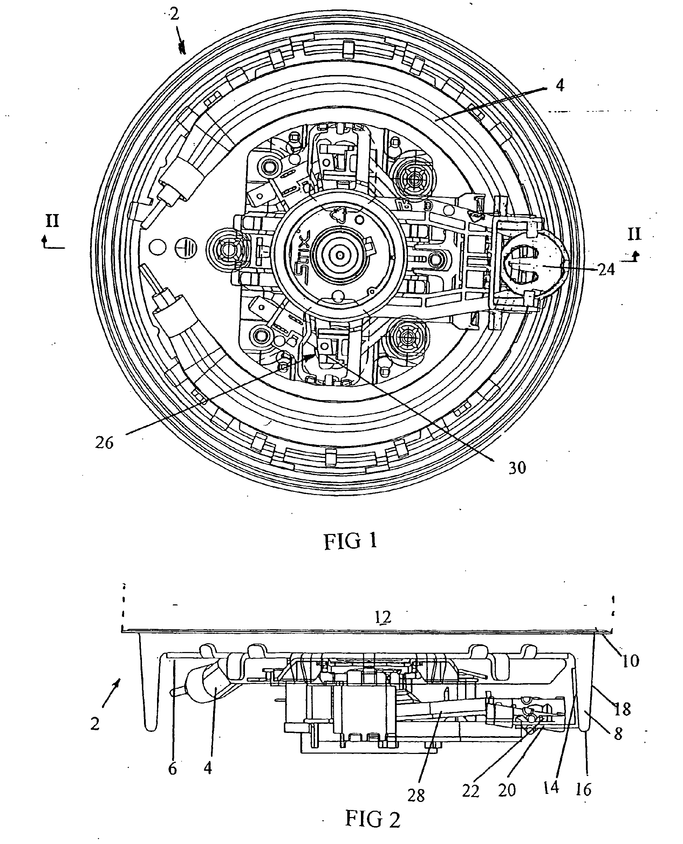

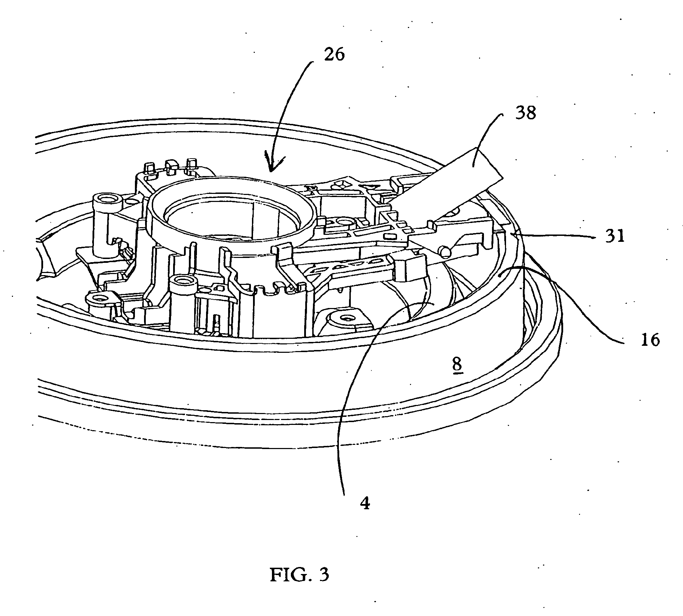

With reference to Figures 1 and 2, a liquid heating appliance such as a kettle or a hot water jug is described for reference purposes only. It is provided with a heated base 2 made, typically, from a stainless steel material.

The base 2 is provided with a sheathed electric heating element 4 which is attached to the base 2 through a thermal diffusion plate 6 in a known manner. Such constructions are, *per se*, well known and need not be described further here.

The base 2 is provided with a peripheral channel 8 which extends around the entire periphery of the base 2. The channel 8 has, at its upper end, a flange 10 which may be used to mount the base 2 in the bottom of the liquid heating chamber 12 of the appliance, as shown schematically in Figure 2. Alternatively, the base 2 may form an integral part of the base 2 of the liquid heating chamber 12.

The channel 8 has an inner wall 14, a bottom wall 16 and an outer wall 18. Bonded e.g. brazed to the inner wall 14 of the channel 8 is a generally L-shaped heat bridge member 20 of copper or other highly thermally conductive material but not in accordance with the invention. The lower limb 22 of the heat bridge 20 sits under, and is in good thermal contact with, the bimetallic actuator 24 of a thermally sensitive control unit 26. In this appliance, the control unit 26 is one of the Applicant's U18 series of products. These comprise a trip lever 28 which is operated on by the actuator 24 to open sets of contacts 30 in the control unit 22. Such control units are well known in the art and further details need not be given here.

In operation, as water in the heating chamber 12 is heated by the heating element 4 through the base 2, the temperature of the water in the peripheral channel 8 lags behind that of the main body of liquid. However, when boiling occurs, the relatively cool water within the channel 8 is displaced such that the temperature of the channel wall 14 rises relatively quickly. This rise in temperature is transmitted to the bimetallic actuator 24 which, upon reaching its operating temperature (typically 90 to 95 °C), will operate to trip the trip lever 28 and disconnect the power supply to the heating element 4.

As liquid in the channel 8 cools, the actuator 24 will eventually re-set allowing the heater to be re-energised.

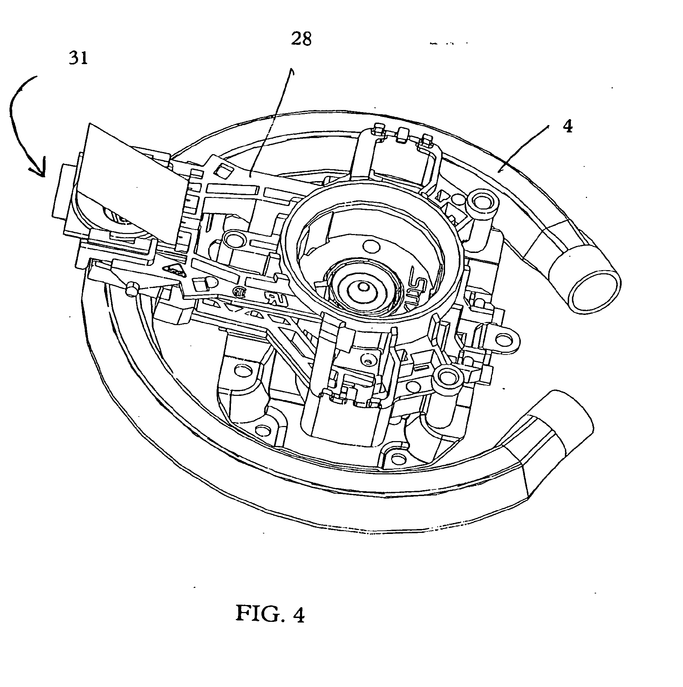

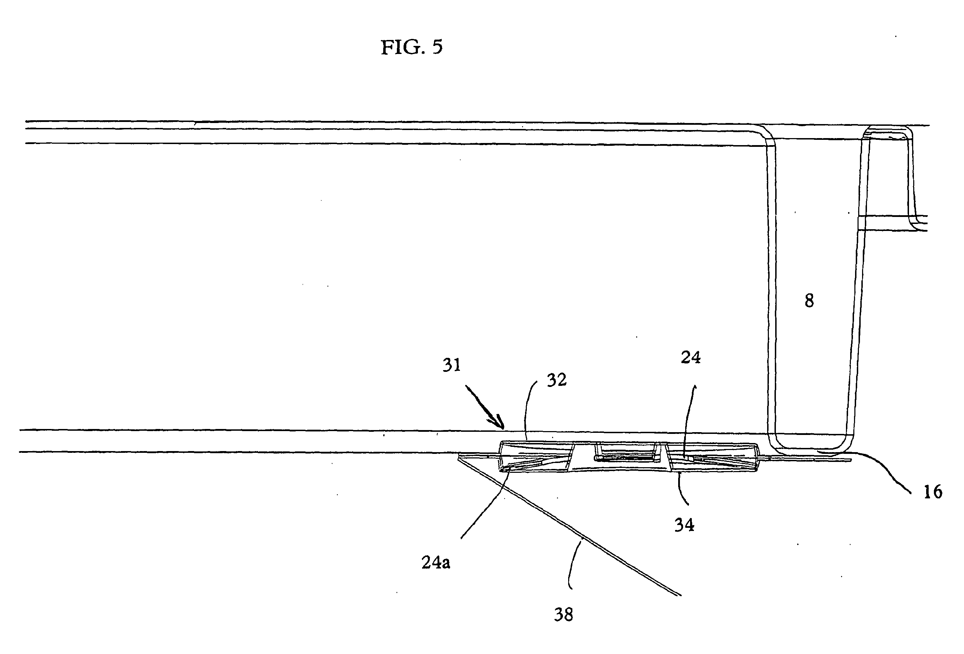

An embodiment of the invention is shown in Figs. 3, 4 and 5. In accordance with this embodiment a heat bridge 31 is provided in thermal contact with the bottom wall 16 of the channel 8. As may be seen most clearly in Fig. 5, the heat bridge 31 comprises two leaves 32, 34 which fit together to define a pocket having the approximate shape of a flattened torus in which the bimetallic actuator 24 is received. Each of the leaves 32,34 is somewhat contoured to the curvature of the bimetal 24. They are arranged such that the bimetal 24 lies against the contour of the upper leaf 32 in its ambient configuration. It might also be in contact with the lower leaf 34 along part of its convex surface.

The lower leaf 34 is formed integrally with a cooling plate 38 which is folded back at an angle of approximately 30 degrees.

The two leaves 32,34 are held together by a rivet (not shown in the drawings) which also passes through the central tongue of the bimetal 36. This means that the two leaves 32,34 are both in constant direct contact with at least part of the bimetal 24 thereby ensuring good thermal conduction into the bimetal. The free edge of the bimetal 24a acts on a push-rod (omitted for clarity) which passes through an aperture in the lower leaf 34.

Operation of the embodiment of Figs. 3 to 5 will now be described. As previously described, as water in the appliance is heated to boiling the water in the channel 8 mixes with the bulk water and suddenly rises in temperature. This temperature rise is transmitted by conduction and convection via both leaves of the heat bridge 32,34 to the bimetal 24. As the bimetal is substantially enclosed between the two leaves, the pocket of air in which it sits heats up rapidly and there is much reduced heat loss to the ambient air. This rapid heating causes the bimetal 24 rapidly to operate by snapping into the opposite curvature (shown in dashed lines in Fig. 5). This acts on a push-rod which passes through an aperture in the lower leaf 34 to trip the trip lever 28 and interrupt power to the element 4.

In the operated configuration the bimetal conforms to the contour of the lower leaf 34 which is in good thermal contact with the cooling plate 38. This allows the bimetal 24 to cool rapidly back down to its reset temperature to allow it to reset more rapidly. Of course both leaves 32,34 will assist in the rapid operation and subsequent reset of bimetal 24 in accordance with the invention, but the upper leaf 32 will be more significant in the heating phase and the lower leaf 34 more significant in the cooling phase.

It will be appreciated that many variations are possible in accordance with the invention. For example a peripheral channel sump is not essential and a more traditional cup sump could be employed. Moreover it is not essential to use a bimetallic actuator - another thermal sensor such as a thermistor could be used.

## Claims

1. An electric liquid boiling appliance, said appliance having a liquid heating chamber having a heated base, said base being provided with a sump recess for holding liquid and a thermal sensor mounted in thermal contact with a wall of said recess for determining the presence of boiling liquid in the recess; **characterised in that** said thermal sensor is received in a pocket in a heat bridge arrangement which is at least partially enclosed so as to restrict airflow over the sensor.

2. An appliance as claimed in claim 1 wherein the sensor is in direct contact with the heat bridge arrangement on two sides.

3. An appliance as claimed in claim 1 or 2 wherein the heat bridge comprises two leaves and the thermal sensor is at least partially encapsulated between the leaves.

4. An appliance as claimed in claim 1, 2 or 3 wherein the heat bridge is shaped to follow the shape of the thermal sensor on at least one side for increasing conductive heat transfer thereto.

5. An appliance as claimed in any preceding claim wherein the heat bridge is bonded to one or more of the wall(s) of the sump recess.

6. An appliance as claimed in any preceding claim wherein the heat bridge is arranged in use such that the rate of heating energy conducted from the sump recess via the heat bridge is significantly greater than the heat loss to ambient.

7. An appliance as claimed in any preceding claim wherein the heat bridge is made of a high thermal conductivity material such as copper or aluminium.

8. An appliance as claimed in any preceding claim wherein the sump recess is in the form of a partially or fully annular channel.

9. An appliance as claimed in claim 8, wherein the channel extends around at least part of the outer periphery of the heated base.

10. An appliance as claimed in claim 8 or 9 wherein the channel has a depth to radial width ratio of greater than one.

11. An appliance as claimed in claim 8, 9 or 10 wherein the channel has a width at its top of less than 10%, and preferably less than 5%, of the base diameter.

12. An appliance as claimed in any of claims 8 to 11 wherein the channel is provided with one or more baffles arranged to disrupt the formation of circumferential flow currents within the channel.

13. An appliance as claimed in any of claims 8-12 wherein the heat bridge is mounted in contact with one or both of the radially outer wall of the channel and the bottom wall of the channel.

14. An appliance as claimed in any preceding claim further comprising a cooling member for cooling the sump recess and/or thermal sensor.

15. An appliance as claimed in claim 14 wherein the sump recess is provided with the cooling member attached thereto in the region of the sensor.

16. An appliance as claimed in claim 14 wherein the heat bridge is provided with a cooling member which is spaced from a wall of the sump recess so as to allow heat to dissipate therefrom.

17. An appliance as claimed in claim 14, 15 or 16 wherein the heat bridge and the cooling member have different thermal capacities.

18. An appliance as claimed in any preceding claim wherein the thermal sensor is a thermally sensitive actuator operable in the event of liquid in the vessel boiling.

19. An appliance as claimed in claim 18 wherein the actuator is a bimetallic actuator.

20. An appliance as claimed in claim 18 or 19 wherein the actuator is part of a thermally sensitive control unit.

21. An appliance as claimed in claim 20 wherein the actuator operates to trip a trip lever in the control to open a set of contacts to switch off or reduce the power to the heated base.

## Patentansprüche

1. Elektrische Flüssigkeitskocheinrichtung, wobei die Einrichtung einen Flüssigkeitsheizbehälter mit Heizbasis aufweist, wobei die Basis mit einer Sumpfvertiefung zum Halten von Flüssigkeit und mit einem in Wärmekontakt mit einer Wand der Vertiefung angebrachten Wärmesensor zur Bestimmung des Vorhandenseins von kochender Flüssigkeit in der Vertiefung versehen ist,
**dadurch gekennzeichnet, dass**
der Wärmesensor in Wärmebrückenanordnung in einer Tasche aufgenommen ist, welche wenigstens teilweise derart gekapselt ist, dass der Luftstrom über den Sensor begrenzt ist.

2. Einrichtung nach Anspruch 1, wobei der Sensor sich in direktem Kontakt mit der Wärmebrückenanordnung an beiden Seiten befindet.

3. Einrichtung nach Anspruch 1 oder 2, wobei die Wärmebrücke wenigstens zwei Blattelemente umfasst und der Wärmesensor wenigstens teilweise zwischen den Blattelementen gekapselt ist.

4. Einrichtung nach Anspruch 1, 2 oder 3, wobei die Wärmebrücke derart geformt ist, dass sie sich der Form des Wärmesensors auf wenigstens einer Seite anpasst, um die Übertragung von Wärme durch Wärmeleitung auf denselben zu erhöhen.

5. Einrichtung nach einem der vorangehenden Ansprüche, wobei die Wärmebrücke mit einer oder mehreren der Wand/Wände der Sumpfvertiefung verbunden ist.

6. Einrichtung nach einem der vorangehenden Ansprüche, wobei die Wärmebrücke in Gebrauch derart angeordnet ist, dass die Rate von von der Sumpfvertiefung über die Wärmebrücke geleiteter Wärmeenergie signifikant größer ist als der Wärmeverlust an die Umgebung.

7. Einrichtung nach einem der vorangehenden Ansprüche, wobei die Wärmebrücke aus einem Material mit hoher Wärmeleitfähigkeit gebildet ist, etwa aus Kupfer oder Aluminium.

8. Einrichtung nach einem der vorangehenden Ansprüche, wobei die Sumpfvertiefung in der Form eines teilweise oder vollständig ringförmigen Kanals ausgebildet ist.

9. Einrichtung nach Anspruch 8, wobei der Kanal um wenigstens einen Teil des Außenumfangs der Heizbasis herum verläuft.

10. Einrichtung nach Anspruch 8 oder 9, wobei der Kanal ein Verhältnis der Tiefe zur radialen Breite von größer als Eins aufweist.

11. Einrichtung nach Anspruch 8, 9 oder 10 wobei der Kanal an seiner Oberseite eine Breite von weniger als 10% und vorzugsweise von weniger von weniger als 5% des Basisdurchmessers aufweist.

12. Einrichtung nach einem der Ansprüche 8 bis 11, wobei der Kanal mit einer oder mehreren Umlenkungen versehen ist, die derart angeordnet sind, dass sie die Bildung von in Umfangsrichtung verlaufenden Strömungen innerhalb des Kanals stören.

13. Einrichtung nach einem der Ansprüche 8 bis 12, wobei die Wärmebrücke in Kontakt mit einer oder beiden der radialen Außenwände des Kanals und der Bodenwand des Kanals angebracht ist.

14. Einrichtung nach einem der vorangehenden Ansprüche, ferner umfassend ein Kühlelement zum Kühlen der Sumpfvertiefung und/oder des Wärmesensors.

15. Einrichtung nach Anspruch 14, wobei die Sumpfvertiefung mit dem Kühlelement versehen ist, das im Bereich des Sensors daran angebracht ist.

16. Einrichtung nach Anspruch 14, wobei die Wärmebrücke mit einem Kühlelement versehen ist, das mit Abstand von einer Wand der Sumpfvertiefung angeordnet ist, um es zu ermöglichen, Wärme davon abzuführen.

17. Einrichtung nach Anspruch 14, 15, oder 16, wobei die Wärmebrücke und das Kühlelement verschiedene Wärmekapazitäten aufweisen.

18. Einrichtung nach einem der vorangehenden Ansprüche, wobei der Wärmesensor ein wärmeempfindlicher Auslöser ist, der in dem Fall, dass Flüssigkeit in dem Gefäß kocht, auslösbar ist.

19. Einrichtung nach Anspruch 18, wobei der Auslöser ein Bimetall-Auslöser ist.

20. Einrichtung nach Anspruch 18 oder 19, wobei der Auslöser Teil einer wärmeempfindlichen Steuer/Regeleinheit ist.

21. Einrichtung nach Anspruch 20, wobei der Auslöser derart wirkt, dass er einen Auslösehebel in der Steuerung/Regelung betätigt, um einen Satz von Kontakten zum Ausschalten oder Verringern der Energiezufuhr zu der Heizbasis zu öffnen.

## Revendications

1. Bouilloire électrique, ladite bouilloire ayant une chambre de chauffage de liquide ayant une base chauffée, ladite base étant munie d'un évidement de collecte pour retenir du liquide et un capteur thermique monté en contact thermique avec une paroi dudit évidement pour déterminer la présence de liquide bouillant dans l'évidement ; **caractérisée en ce que** ledit capteur thermique est reçu dans une poche dans un agencement en pont thermique qui est au moins partiellement enfermé de manière à limiter un écoulement d'air sur le capteur.

2. Bouilloire selon la revendication 1, dans laquelle le capteur est en contact direct avec l'agencement en pont thermique sur deux côtés.

3. Bouilloire selon la revendication 1 ou 2, dans laquelle le pont thermique comprend deux lamelles et le capteur thermique est au moins partiellement encapsulé entre les deux lamelles.

4. Bouilloire selon la revendication 1, 2 ou 3, dans laquelle le pont thermique est formé pour suivre la forme du capteur thermique sur au moins un côté pour augmenter l'échange thermique conductif de celui-ci.

5. Bouilloire selon l'une quelconque des revendications précédentes, dans laquelle le pont thermique est collé à une ou plusieurs des parois de l'évidement de collecte.

6. Bouilloire selon l'une quelconque des revendications précédentes, dans laquelle le pont thermique est agencé en utilisation de telle sorte que le débit d'énergie de chauffage conduite par l'évidement de collecte par l'intermédiaire du pont thermique est significativement supérieur à la perte de chaleur dans l'environnement.

7. Bouilloire selon l'une quelconque des revendications précédentes dans laquelle le pont thermique est fait à partir d'un matériau à conductivité thermique élevée tel que le cuivre ou l'aluminium.

8. Bouilloire selon l'une quelconque des revendications précédentes, dans laquelle l'évidement de collecte est de la forme d'un canal complètement ou partiellement annulaire.

9. Bouilloire selon la revendication 8, dans laquelle le canal s'étend autour d'au moins une partie de la périphérie extérieure de la base chauffée.

10. Bouilloire selon la revendication 8 ou 9, dans laquelle le canal possède un rapport de la profondeur à la largeur radiale supérieur à un.

11. Bouilloire selon la revendication 8, 9 ou 10, dans laquelle le canal possède une largeur à son sommet inférieure à 10 %, et de préférence inférieure à 5 %, du diamètre de la base.

12. Bouilloire selon l'une quelconque des revendications 8 à 11, dans laquelle le canal est muni d'un ou plusieurs déflecteurs agencés pour éviter la formation de courants d'écoulement circonférentiels dans le canal.

13. Bouilloire selon l'une quelconque des revendications 8 à 12, dans laquelle le pont thermique est monté en contact avec un ou deux de la paroi extérieure radialement du canal et la paroi de fond du canal.

14. Bouilloire selon l'une quelconque des revendications précédentes, comprenant en outre un élément de refroidissement pour refroidir l'évidement de collecte et/ou le capteur thermique.

15. Bouilloire selon la revendication 14, dans laquelle l'évidement de collecte est muni de l'élément de refroidissement fixé à celui-ci dans la région du capteur.

16. Bouilloire selon la revendication 14, dans laquelle le pont thermique est muni d'un élément de refroidissement qui est espacé d'une paroi de l'évidement de collecte de sorte qu'il permette à la chaleur de se dissiper de celui-ci.

17. Bouilloire selon la revendication 14, 15 ou 16, dans laquelle le pont thermique et l'élément de refroidissement ont des capacités thermiques différentes.

18. Bouilloire selon l'une quelconque des revendications précédentes, dans laquelle le capteur thermique est un actionneur sensible thermiquement actionnable dans l'éventualité d'un liquide dans le récipient de bouilloire.

19. Bouilloire selon la revendication 18, dans laquelle l'actionneur est un actionneur bilame.

20. Bouilloire selon la revendication 18 ou 19, dans laquelle l'actionneur est une partie d'une unité de commande sensible thermiquement.

21. Bouilloire selon la revendication 20, dans laquelle l'actionneur fonctionne pour déclencher un levier de déclenchement dans la commande pour ouvrir un ensemble de contacts pour mettre hors circuit ou réduire l'énergie transmise à la base chauffée.
